# EUROPEAN PATENT SPECIFICATION

(11) **EP 0 364 307 B1**
(45) Date of publication and mention of the grant of the patent: **26.07.1995**
(21) Application number: 89310585.8
(22) Date of filing: 16.10.1989
(51) Int. Cl.: G09G 3/36, H04N 3/12

(54) **Method and apparatus for displaying different shades of gray on a liquid crystal display**
Verfahren und Einrichtung zur Anzeige von verschiedenen Grauwerten auf einem Flüssigkristallbildschirm
Méthode et dispositif pour l'affichage de différentes teintes de gris sur un dispositif d'affichage à cristaux liquides

(30) Priority: 14.10.1988 US 258269
(43) Date of publication of application: 18.04.1990
(73) Proprietor: Compaq Computer Corporation, Houston Texas 77070 (US)
(72) Inventor: Garrett, James H., Spring Texas 77379 (US)
(74) Representative: Brunner, Michael John

(56) References cited:
- EP-A- 0 193 728

## Description

This invention relates to electronic display panels. More particularly, it relates to display panels comprising liquid crystals and similar display systems having picture elements ("pixels") which normally are selectable in only one of two possible states (e.g., "on" or "off").

Many different types of display panels or screens are used in electronic equipment. One particularly common type is the cathode ray tube (CRT) used in television receivers and many computer monitors. Other available display systems include those which employ incandescent filaments, light-emitting diodes ("LED's"), liquid crystal displays ("LCD's"), plasma display panels, and electroluminescent panels.

CRT's are available in both monochrome and color versions. Inasmuch as many personal computers are equipped with color monitors, much software written for such computers is designed to make use of the color capabilities of the monitor.

When such software is used on a system having only a monochrome monitor, it is customary to "translate" the colors into various "shades of gray". This term, however, does not necessarily imply that the display is colored gray. Many computer monitors employ green or amber phosphors and hence "shades of gray" actually denotes various intensity levels of those colors.

On a CRT display, various shades of gray (or intensity levels) can be generated simply by varying the intensity of the electron beam impinging on the phosphors of the screen. As this may be accomplished in analog fashion, a virtual continuum of shades of gray is available. Similarly, the intensity of an incandescent filament can be varied by changing the current passing through the filament and drive circuitry is well known which permits the current to be a continuous variable.

In contrast, other display systems employ essentially "two-state" screen dots, i.e., display elements whose intensity at an instant in time cannot normally be continuously varied, but rather are designed to be in one of two possible states e.g., "on" or "off"; "black" or "white", "light" or "dark"; "polarized" or "unpolarized"; etc.

Plainly, such display systems are ideally suited for use with digital computers which operate using the binary number system. A liquid crystal display is an example of such a system.

A problem arises in generating shades of gray on such display systems. Because such systems normally lack intermediate states, "translations" of color displays become difficult or impossible, and at least a portion of the information contained in a display intended for a color monitor is lost.

It might seem that one solution to this problem would simply be to rapidly cycle the various screen dots on and off, varying the on time so as to produce different shades of grey. If the cycling were sufficiently rapid, the alternating character would not be perceived by the human eye. In practice, however, there are at least two problems with this approach.

The first problem is that many two-state display systems, particularly LCD's, cannot be rapidly cycled. This may be due to constraints inherent in the drive circuitry and/or the intrinsic time constant of the display. For example, LCD'S function by aligning liquid crystal molecules in response to an applied electric field. This alignment takes time to accomplish, and the unalignment of the molecules when the electrical signal is removed or reversed also requires an appreciable time interval.

The second problem arises when the repeat rate (the rate at which the screen display is refreshed) is relatively low, e.g., approximately 70Hz. The problem is that when an attempt is made to assign different shades of grey to adjacent screen dots using a fixed cycling scheme, a perceptible flicker often results. It is contemplated that this flicker is due to beat frequencies between the two "shades"

EP-A-0193728 discloses a display control system providing a phase shift on display signals in order to prevent flicker of a generated image.

According to the present invention, there is provided a display control system for producing an optical grey-scale image on an LCD device having an array of display elements each providing a first or a second optical state in response to a first or a second signal level respectively, the array of display elements having a plurality of rows and a plurality of columns, the system comprising:
means for generating respective display signals for the display elements for producing a grey-scale image of a specified colour, the display signals comprising digital signals each having a pattern of bits respectively corresponding to the first or the second signal level, a predefined pattern cycle and a duty cycle related to the optical grey-scale of the image at the position of the respective display element, the pattern of bits of each one of the digital signals being repetitively generated, the means for generating display signals providing successive bits of the display signals for respective display elements in successive timeframes, in each timeframe one bit of each of the display signals being provided in sequence for consecutive display elements in each row from a first to a last display element of the row and for consecutive rows beginning at a first row and ending at a last row of the array; the system being characterised by:
the generating means causing a predetermined skewing of each subsequently generated display signal having a pattern cycle with a bit length which divides integrally into the total number of display elements in a row each time a bit of a respective display signal is provided for the last display element of a row, and causing a predetermined skewing of each subsequently generated display signal having a pattern cycle with a bit length which divides integrally into the total number of display elements in the array each time a bit of a respective display signal is provided for the last display element of the last row of the array.

According to the present invention there is also provided a method for driving an LCD device having a multiplicity of display elements each providing a first or a second optical state in response to a first or a second signal level, respectively, to produce an optical grey-scale image, the display elements being disposed in an array having a plurality of rows and a plurality of columns, the method comprising the steps of:
generating respective display signals for the display elements for producing a grey-scale image of a specified colour, the display signals comprising digital signals each having a pattern of bits respectively corresponding to the first or the second signal level and having a predefined pattern cycle and a duty cycle related to the optical grey-scale of the image at the position of the respective display element, the pattern of this of each one of the digital signals being repetitively generated;
providing successive bits of the display signals for the display elements in successive timeframes, in each timeframe one bit of each of the display signals being provided in sequence for consecutive display elements in each row from a first to a last display element of the row, and for consecutive rows beginning at a first row and ending at a last row of the array; the method characterised by the steps of:
causing a predetermined skewing of each subsequently generated display signal having a pattern cycle with a bit length which divides integrally into the total number of display elements in a row each time a bit of a respective display signal is provided for the last display element of a row; and
causing a predetermined skewing of each subsequently generated display signal having a pattern cycle with a bit length which divides integrally into the total number of display elements in the array each time a bit of a respective display signal is provided for the last display element of the last row of the array, whereby in successive timeframes adjacent display elements in each row of the array are provided with different sequences of the first and the second signal levels, and adjacent display elements in each column of the array are provided with different sequences of the first and the second signal levels.

The method and apparatus of the present invention provides a means for both spatially and temporally resolving the on/off states of a two-state display device such as an LCD to provide apparent shades of grey. In one embodiment, eight shades of grey are provided. These shades are generated by cycling individual screen dots such that when averages over time, they are: always off; on 20% time; 33%of the time; 40% of the time; 60% of the time; 67% of the time; 80% of the time; or, on at all times.

A feature of the invention is the fact that the cycling between on and off states is not performed in a discernible pattern. For example, the shade of grey corresponding to a screen dot being on 40% of the time can be achieved by selecting the screen dot to be on for 2 cycles out of every five. However, rather than employing a pattern which repeats every five cycles (such as 100101001010010100101001010010. . . . .), a pseudo-random pattern is utilized which repeats only after many cycles.

An additional feature of the method of the present invention is that adjacent screen dots, when selected to display the same shade of gray, do not cycle on and off in synchronization, but rather utilize out-of-phase cycling patterns. This spatial resolution reduces perceived flicker in the display and provides a more stable image.

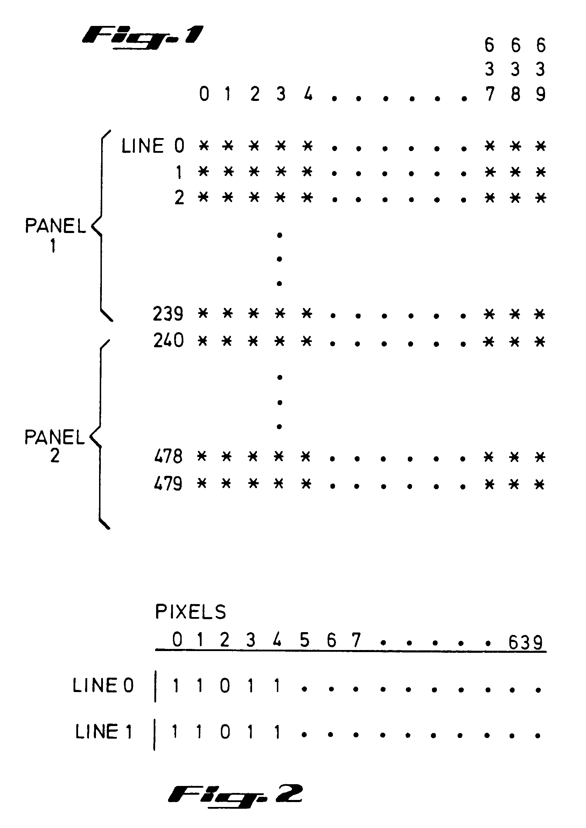

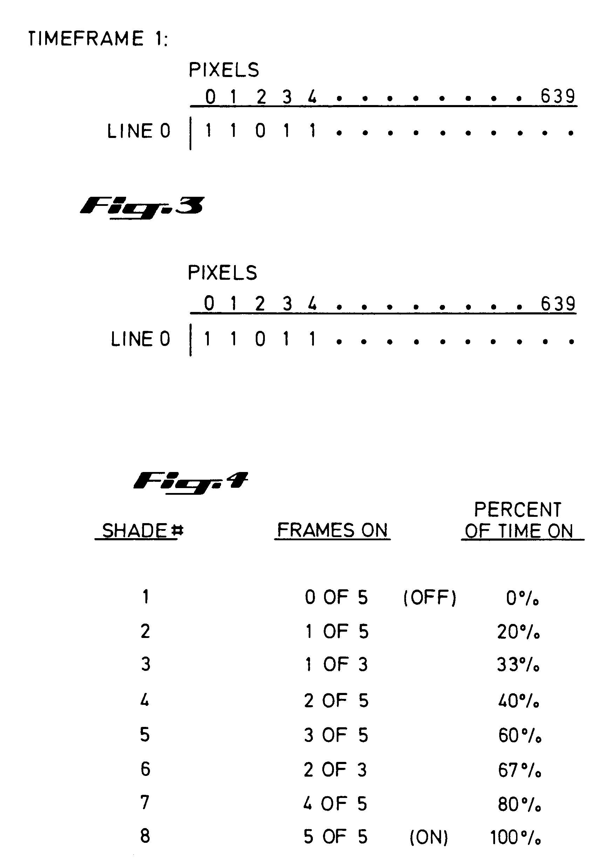

Figure 1 shows a screen dot arrangement of an LCD panel in accordance with the invention. For convenience, the term "pixel" is used synonomously with "screen dot" except where indicated otherwise. The pixels are arranged to form a 640-column by 480-row display, which may be formed from two 640 × 240-pixel subpanels. The terms "row" and "line" are used interchangeably.

Any given pixel is driven to simulate a shade of gray by driving it toward its ON state for a specified length of time, then by driving it toward its OFF state for another specified length of time. For convenience, the basic unit of time is referred to here as a "timeframe," which may be approximately 1/70th of a second.

Flickering and "swimming" (an apparent instability of the picture on a display, somewhat akin to the visual image of a mirage in a desert) may be reduced in accordance with the invention by driving pixels to conform generally to two basic guidelines: (1) no two consecutive lines of pixels should display the same ON-OFF pattern, and (2) any given line of pixels should not display the same ON-OFF pattern in two consecutive timeframes.

In other words, each pixel's on-off display should be modulated both in a temporal dimension and in a spatial dimension.

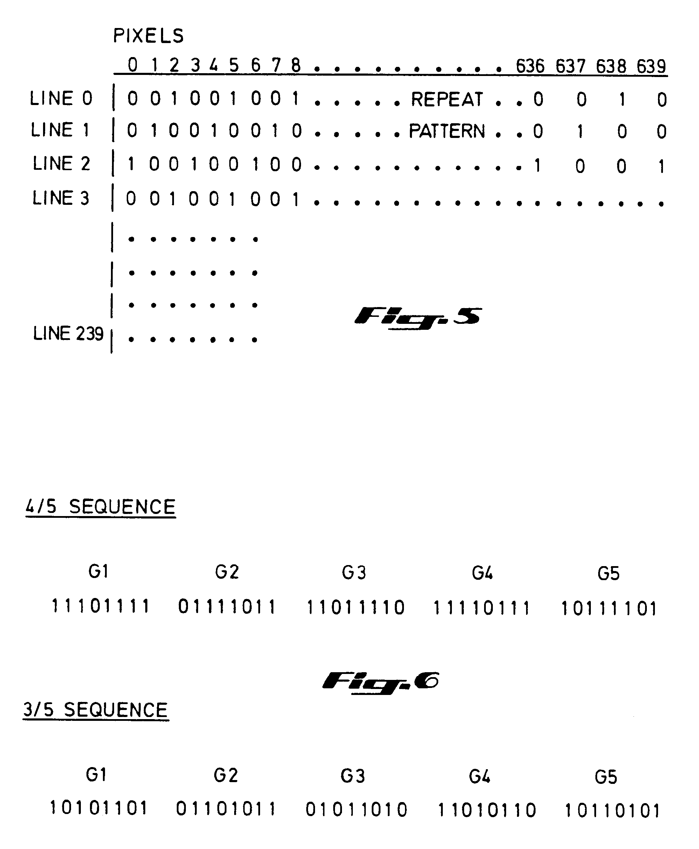

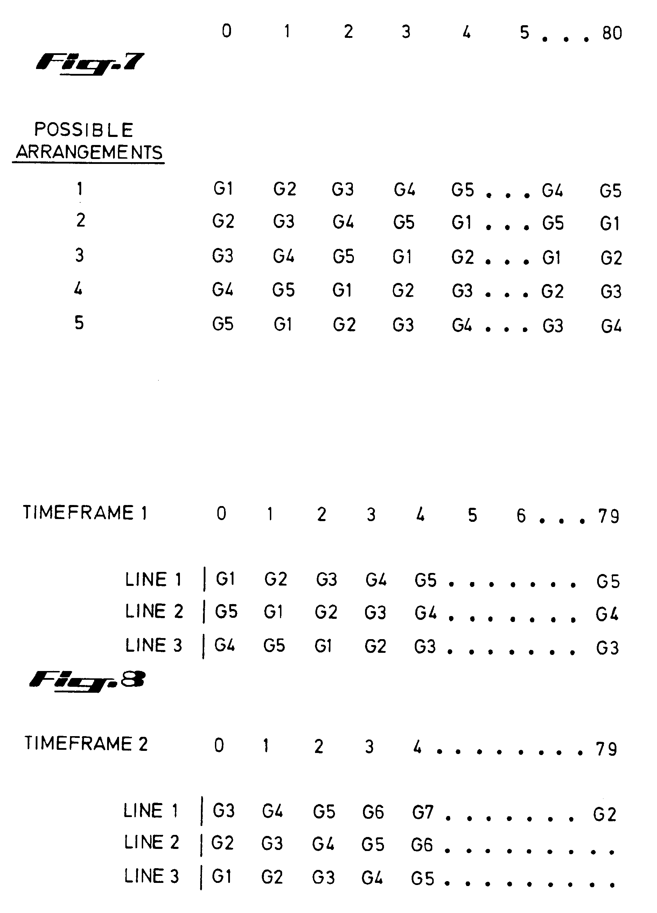

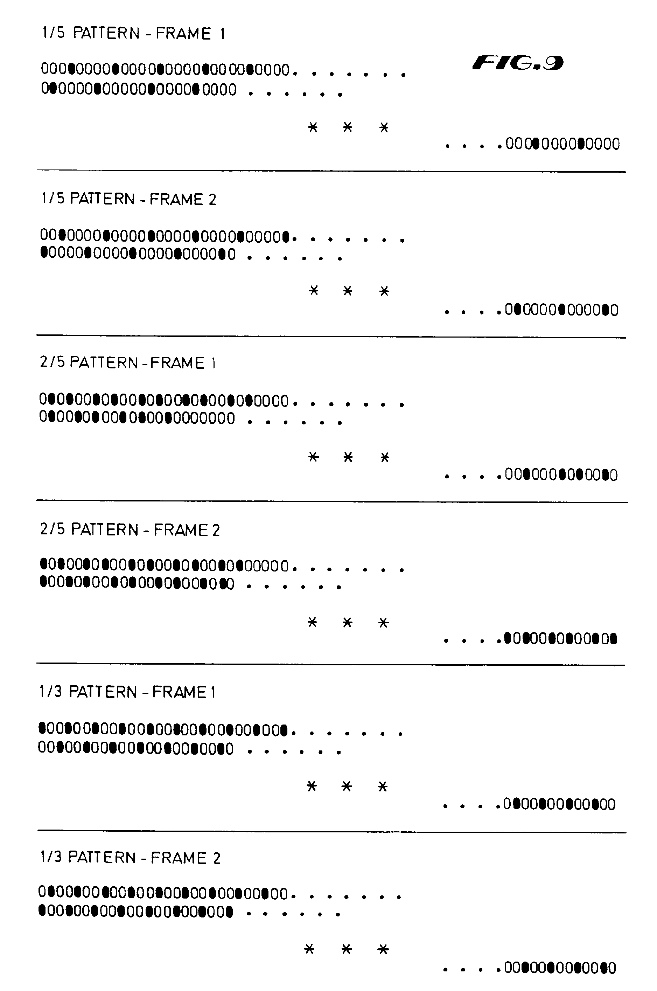

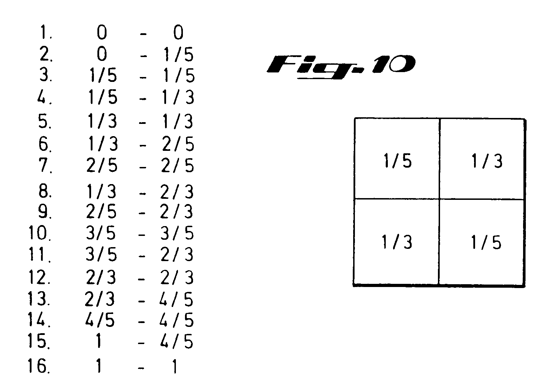

These guidelines are illustrated in Figures 2 and 3. Assume that a 1 means that the pixel in question is ON and a 0 means the pixel is OFF. The configuration depicted in Figure 2 does not conform to the first guideline. Likewise, the configuration depicted in Figure 3 does not conform to the second guideline.

Two terms are used herein for convenience. A "pattern cycle" is the repetitive period of a given pixel either in the time dimension (expressed in timeframes) or in a spatial dimension (expressed in pixels). A "duty cycle" is the number of timeframes or pixels within a pattern cycle in which the pixel is on, divided by the number of timeframes or pixels in the pattern cycle.

In the time dimension, for example, a pixel that is ON for 3 timeframes and then OFF for 2 timeframes, in a repetitive time pattern, has a pattern cycle of 5 and a duty cycle of 3/5. Pixels in a 3/5 duty cycle are sometimes referred to herein as 3/5 pixels.

Figure 4 depicts a table of specific duty cycles for achieving eight different shades of gray utilizing two pattern cycles, namely 3 and 5, with varying duty cycles.

As noted above, to conform to the guidelines discussed above, each pixel should be modulated at a timeframe rate in both time and space. The pattern cycle of 3 is the simpler of the two cases; the set of all possible duty cycles to achieve this modulation in such a pattern cycle are 0/3, 1/3, 2/3, and 3/3.

In the 0/3 and 3/3 duty cycles, the associated pixels are always off and always on, respectively. Consequently, only the other two duty cycles need be examined.

In the spatial dimension, the other two patterns in the pattern cycle of 3 are the permutations of 001 (which is the 1/3 duty cycle) and the permutations of 110 (which is the 2/3 duty cycle).

It will be noted that these two patterns are logical inversions of each other. Therefore, only an arbitrary one of them need be discussed; the other can be generated by inverting the other.

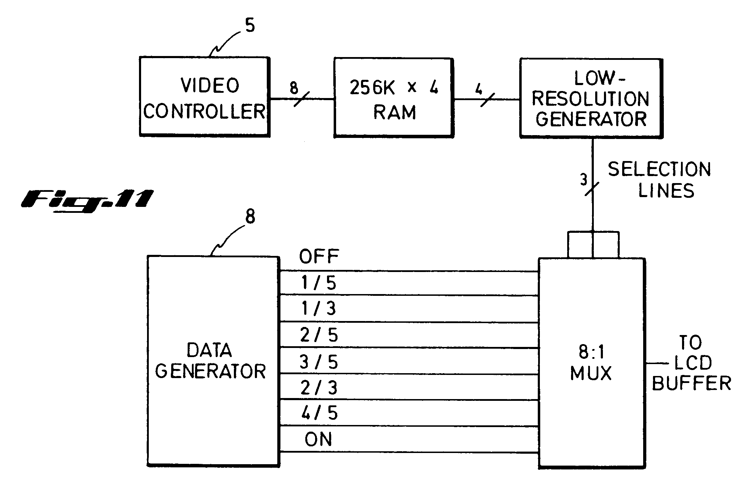

The 1/3 duty cycle is discussed here. This duty cycle is implemented as shown in Figure 5. The basic pattern (001) is repeated throughout an entire line.

A possibility that must be taken into account is that a run of pixels in a certain pattern will transcend a row, i.e., that a particular shade of gray, and its associated pixel pattern, will run past the end of one row into another row. This raises the possibility that two consecutive rows might share the same pixel pattern, and thus would not strictly conform to the above guidelines.

This is not a danger for the 1/3 duty cycle: since a line in the illustrative embodiment consists of 640 pixels, and 640 is not an integral multiple of 3, an Nth line of pixels will not have the same pixel pattern as an N+1th line. More particularly, a pixel pattern that begins at pixel 0 of the Nth line will repeat beginning at pixel 639 of that line and will thus be continued at pixels 0 and 1 of the next line. Consequently, the first guideline is automatically satisfied at least as to those two lines.

Note, however, that for any sequence of four or more lines 0 through 3 of the same shade of gray, lines 0 and 3 are identical. This means that each line is repeated at intervals of 3 (i.e., line 0 = line 3, line 1 = line 4, line 2 = line 5, etc.), meaning that a three-line pattern in the same shade of gray would repeat itself. Because 240 (the number of lines on each of the two subpanels in the illustrative embodiment) is an integral multiple of 3, it is possible that the entire screen pattern could be repeated from timeframe to timeframe.

To prevent this, the pixel pattern is skewed or shifted between any two consecutive timeframes. For example, if line 0 begins with 001 in timeframe 1, it begins with 100 in timeframe 2 to avoid a repeating pattern from timeframe to timeframe. This is achieved by setting the pixel (0,0) during timeframe N+1 to be equal to the setting of the pixel (239, 639) during timeframe N. Once this is done, both guidelines are satisfied.

A pattern cycle of 5 is implemented with two basic sequences, a 4/5 sequence and a 3/5 sequence, as shown in Figure 6. It will be noted that the 1/5 and 2/5 sequences are logical inversions of the 4/5 and 3/5 sequences, respectively. Thus, only the latter two will be discussed.

The 640 pixels in a given row are divided into 16 sets of five groups of 8 pixels each (G1 through G5) as a matter of convenience (e.g., to make hardware implementation easier). When the five groups of either sequence are put together, it will be apparent that they do indeed average out to 4/5 on and 3/5 on, respectively.

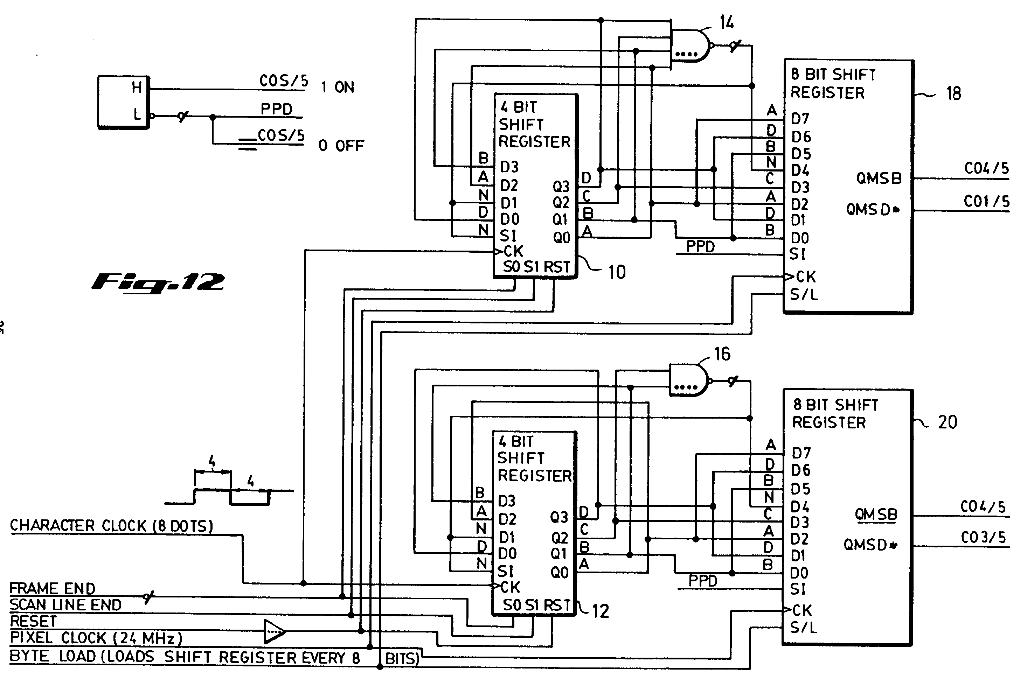

Since the groups (G1-G5) are each composed of eight bits, a horizontal line of 640 pixels will contain exactly 80 groups. Every line in a 3/5 or 4/5 sequence therefore contains one of the five possible arrangements shown in Figure 7.

Regardless of which arrangement is used, the pattern will repeat line after line and timeframe after timeframe if left alone. This is because 5 divides evenly into both 640 (number of pixels per line) and 240 (number of lines per panel). Skewing prevents repetition of this pattern in a similar manner to that discussed above.

Line-to-line skewing is achieved as follows. If a line I begins with Group N (e.g., G1 is group 1, G2 is group 2, etc.), then the next line I+1 should start with group N-1. If N-1 equals 0, then line I+1 should start with group 5.

Timeframe to timeframe skewing is achieved as follows. If during a timeframe I, a given spatial pixel sequence begins with group N, then during the next timeframe I+1, that pixel sequence should start with group N+2. If N+2 is greater than 5, then during timeframe I+1 the pixel sequence should start with group 1.

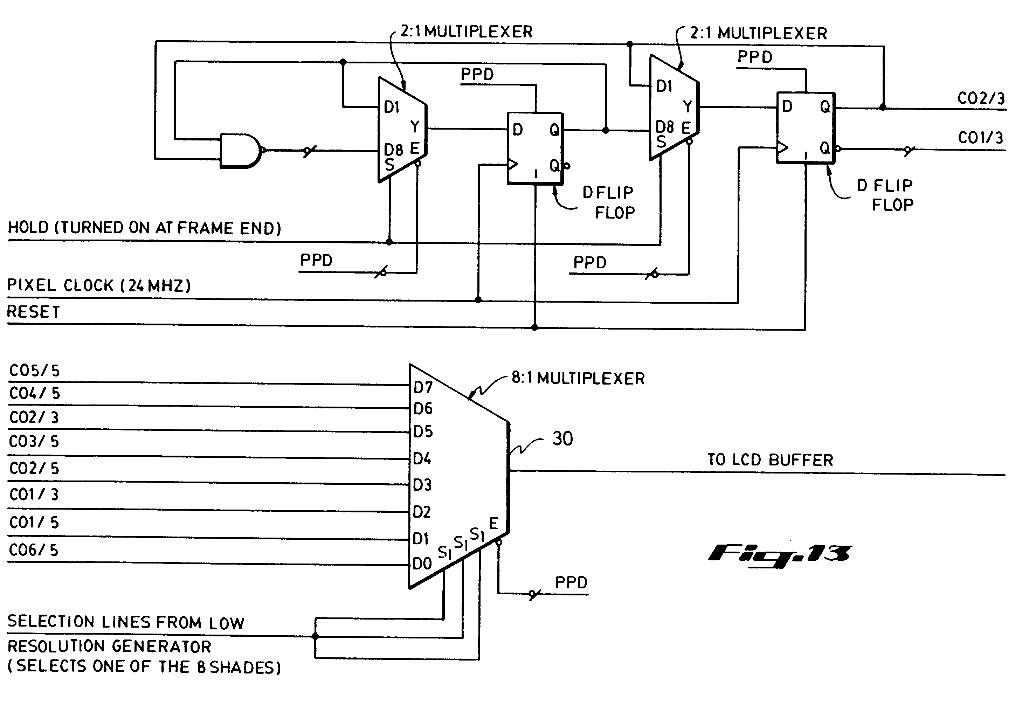

An example of how these two rules are utilized is shown in Figure 8. Figure 9 shows a representation of the upper left and lower right hand corners of an LCD display in each of the patterns 1/5, 2/5 and 1/3 between two successive timeframes.

The duty cycles described above advantageously reduce flickering and swimming in other ways. For example, the frequency beating between pixels is reduced. Furthermore, the duty cycles reduce the chance of generating a net DC bias across a pixel (which could damage the pixel).

Conventionally, screen displays are commonly classified as high resolution and low resolution. In high resolution, each pixel is typically composed of one screen dot; in low resolution, each pixel is composed of more than one dot, e.g., a 3X3 dot pattern. The greater number of dots per pixel in low resolution increases the available granularity of gray shading.

In accordance with the invention, using a 2X2 dot pattern as a pixel allows cross-hatching in the conventional manner to produce 16 shades of gray instead of eight. For example, cross-hatching can be used in low resolution to produce a pixel that is darker than a 0 pixel but lighter than a 1/5 pixel. A similar operation can be used to obtain a gray shade between the 1/5 and 1/3 pixels.

Figure 10 sets forth a table of duty cycles that may be used in generating 16 shades of gray. Also shown in Figure 10 is a quartered box representing a 4-dot pixel, each quarter representing a screen dot. In each quarter of the box, a number is shown that represents the duty cycle for that box for a particular shade of gray, in this case the shade designated by number 4 in Figure 10.

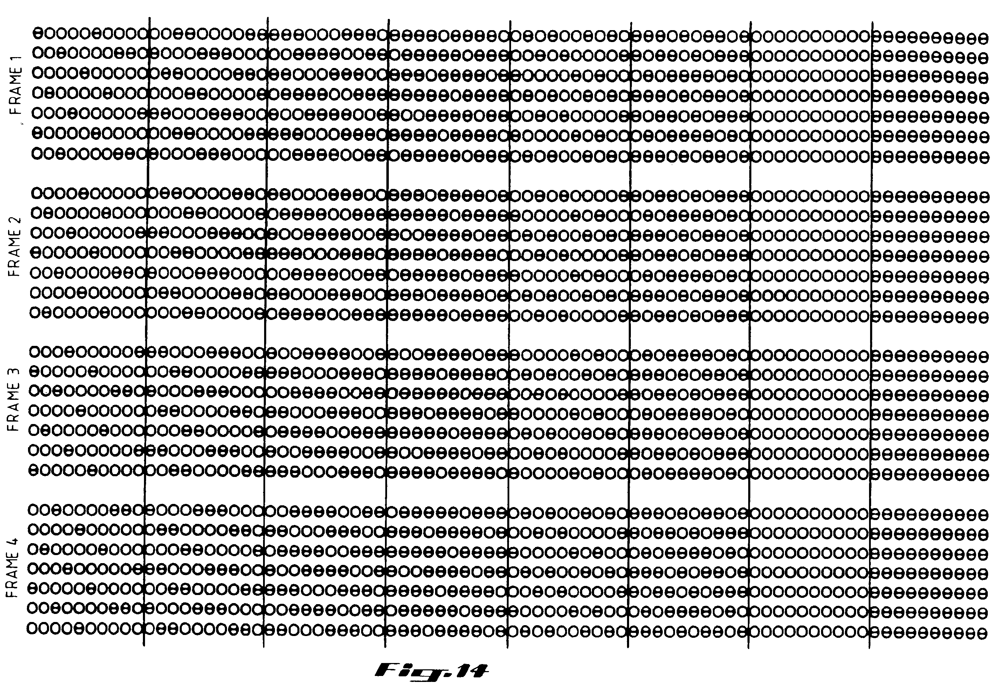

A high-level diagram of apparatus capable of implementing the method of the invention is shown in Figure 11. A video controller 5, not part of the invention, outputs an 8-bit string that specifies which color (out of a possible 256) is desired for display.

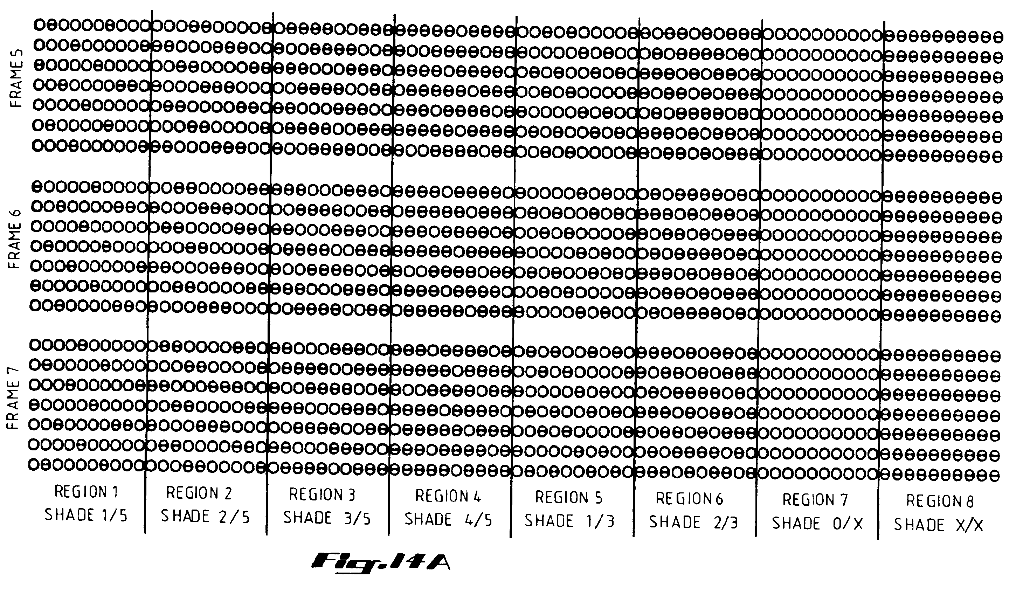

A schematic of an illustrative data generator system 8 is depicted in Figures 12 and 13. Two 4-bit shift registers 10 and 12 and corresponding AND gates 14 and 16 operate to generate and rotate the patterns in which screen dots are turned ON and OFF.

The data generator system's normal mode of operation is to rotate the display pattern, with two exceptions. In the case of an end-of-line signal, shown in the Figure as scanline end, the system performs a hold or non-rotate operation, so that the next display pattern generated is the same as the last display pattern generated before the end-of-line signal. In the case of an end-of-screen signal, shown in the Figure as frame end (e.g., a vertical sync signal that in the illustrative embodiment occurs after 240 LCD lines), the data generator system self-loads with the proper bit values so that the pattern will be skewed from timeframe to timeframe.

The 8 bit shift registers 18 and 20 in Figure 12 operate temporarily store the rotated or skewed patterns and send them, one bit at a time, to the 8:1 multiplexer 30 shown in Figure 13. The portion of the data generator system 8 shown in Figure 12 provide all of the shades that have a pattern cycle of 5 (i.e., 0, 1/5, 2/5, 3/5, 4/5, 5/5).

The shades of gray that have a pattern cycle of three (1/3, 2/3) are provided by the circuitry shown in the top half of Figure 13. This configuration simply rotates the three bit pattern once every cycle. When vertical sync occurs, a hold or non-rotate is performed. The horizontal sync signal need not be considered in this case because line to line skewing is not necessary in the shades that have a pattern cycle of 3.

When all 8 shades (0, 1/5 ... 4/5, 1) are available, they are passed on to the 8:1 multiplexer 30, as shown in Figure 12. The three control lines of the multiplexer then choose one of the eight shades of gray and send it to the LCD panel to be displayed.

Even in low resolution mode, this shading only provides a maximum of 16 different shades. Therefore, the eight bit string will be used to determine which of the 16 cross-hatched shades is desired.

Cross-hatching is actually performed within the low resolution generator. However, if high resolution is desired, then these four bits must pass through the low resolution generator and be further reduced to 3 bits (8 choices). Once this is done, these bits pass on to the multiplexer and one of the eight high resolution shades is chosen and sent to the LCD panel to be displayed.

It will be recognized by those of ordinary skill having the benefit of this disclosure that the embodiments described here are presented for the purpose of illustrating, and not of limiting, the invention defined by the claims set forth below.

For example, table 1 sets forth a computer program written in the BASICA language (Microsoft Corporation, Redmond, Washington) that permits a user to specify one of 8 shades for each of 8 horizontally-disposed regions, thereby to simulate screen output in those shades.

Figure 14 contains a portion of the output of the BASIC simulation program listed in table 1. For the particular output listed, 7 timeframes were chosen, each having an output height of 7 lines. The output may be considered to be a depiction of a portion of an LCD screen (e.g., the first 80 pixels of the first 7 lines in the upper left corner of the pixel array). The 80 pixels shown are divided into 8 regions of 10 pixels each and a different shade is assigned to each region. For the output illustrated in Figure 14, Region 1 is assigned the shade 1/5; region 2 is assigned the shade 2/5; region 3 is assigned the shade 3/5; region 4 is assigned the shade 4/5; region 5 is assigned the shade 1/3; region 6 is assigned the shade 2/3; region 7 is assigned the shade 0/X (i.e., all pixels off at each timeframe); and region 8 is assigned the shade X/X (i.e., all pixels on at each timeframe). Figure 14 depicts a total of 7 timeframes. It will be noted that the pattern repeats every 5 timeframes.

### TABLE 1

- 1000: PRINT
- 1010: DIM AVG[80]
- 1020: GEN5[1,1]=0
- 1030: GEN5[1,2]=1
- 1040: GEN5[1,3]=1
- 1050: GEN5[1,4]=1
- 1060: GEN5[1,5]=1
- 1070: GEN5[2,1]=0
- 1080: GEN5[2,2]=1
- 1090: GEN5[2,3]=0
- 1100: GEN5[2,4]=1
- 1110: GEN5[2,5]=0
- 1120: GEN3[1]=0
- 1130: GEN3[2]=1
- 1140: GEN3[3]=1
- 1150: FSIZE = 14
- 1160: OVERWRITE =0
- 1170: MAXFRAMES = 70
- 1180: PRINTER =0
- 1190: FOR X= 1 TO 8
- 1200: CO(X)=X
- 1210: NEXT X
- 1220: CLS
- 1230: INPUT "Do you wish to change display parameters [y]";A$
- 1240: IF A$ <> "y" AND A$ <> "Y" AND A$ <> ""THEN GOTO 1440
- 1250: IF A$="" THEN PRINT "y"
- 1260: PRINT
- 1270: INPUT "Enter frame height, no. of frames : ";FSIZE, MAXFRAMES
- 1280: FSIZE=FSIZE-1
- 1290: PRINT
- 1300: INPUT "Should frames be overwritten [y] : ";A$
- 1310: IF A$="y" OR A$ ="Y" OR A$="" THEN OVERWRITE =1
- 1320: IF A$="" THEN PRINT "y"
- 1330: PRINT
- 1340: INPUT "Is there a printer to print the results [y]";A$
- 1350: IF A$="y" OR A$="Y" OR A$="" THEN PRINTER =1 ELSE PRINTER =0
- 1360: IF A$="" THEN PRINT "y"
- 1370: PRINT
- 1380: PRINT "Please enter gray levels (1-8) to be displayed in regions 1-8"
- 1390: FOR X=1 TO 8
- 1400: PRINT" gray level of region ";X;" :";
- 1410: INPUT CO(X)
- 1420: NEXT X
- 1430: REM
- 1440: REM starting main display loop
- 1450: REM
- 1460: SCREEN 1
- 1470: CLS
- 1480: FOR FRAME=1 TO MAXFRAMES
- 1490: FOR Y=0 TO FSIZE
- 1500: FOR X=0 TO 79
- 1510: REM
- 1520: REM determining pattern that next line should start with and storing it
- 1530: REM
- 1540: IF X <> 0 THEN 1680
- 1550: GEN5[1,0]=GEN5[1,5] : GEN5[2,0]=GEN5[2,5]
- 1560: FOR I=5 TO 1 STEP -1
- 1570: IF I=1 THEN J=0 ELSE J=I-1
- 1580: G1[I]=GEN5[1,J]
- 1590: G2[I]=GEN5[2,J]
- 1600: NEXT I
- 1610: IF Y <> 0 THEN GOTO 1690
- 1620: G1[0]=G1[5] : G2[0]=G2[5]
- 1630: FOR I=5 TO 1 STEP -1
- 1640: IF I=1 THEN J=0 ELSE J= I-1
- 1650: FG1[I]=G1[J]
- 1660: FG2[I]=G2[J]
- 1670: NEXT I
- 1680: REM
- 1690: REM
- 1700: REM setting 8-bit pattern in PI[] depending upon g-level and gen5[]
- 1710: REM
- 1720: GLEVEL=CO[(INT(X/10)+1)]
- 1730: IF (GLEVEL>4) OR (GLEVEL<1) THEN GOTO 1840
- 1740: IF (GLEVEL=4) OR (GLEVEL=1) THEN GENNUM = 1 ELSE GENNUM = 2
- 1750: PI[1]=GEN5[GENNUM,1]
- 1760: PI[2]=GEN5[GENNUM,4]
- 1770: PI[3]=GEN5[GENNUM,2]
- 1780: PI[4]=GEN5[GENNUM,5]
- 1790: PI[5]=GEN5[GENNUM,3]
- 1800: PI[6]=GEN5[GENNUM,1]
- 1810: PI[7]=GEN5[GENNUM,4]
- 1820: PON=PI[X+1-8*INT(X/8)]
- 1830: PI[8]=GEN5[GENNUM,2]
- 1840: CNT=CNT+1
- 1850: IF CNT <4 THEN GOTO 1950
- 1860: REM
- 1870: REM rotating gen3
- 1880: REM
- 1890: GEN3[0]=GEN3[1]
- 1900: FOR I=1 TO 3
- 1910: IF I=3 THEN J=0 ELSE J=I+1
- 1920: GEN3[I]=GEN3[J]
- 1930: NEXT I
- 1940: CNT=0
- 1950: REM
- 1960: REM setting square of six pixels on or off that simulate 1 pixel on Icd
- 1970: REM
- 1980: IF GLEVEL=8 THEN PON=1 ELSE IF GLEVEL=7 THEN PON=0
- 1990: IF (GLEVEL=5) OR (GLEVEL=6) THEN PON=GEN3[1+X-3*INT(X/3)]
- 2000: IF GLEVEL=1 OR GLEVEL=3 OR GLEVEL=5 THEN IF PON=1 THEN PON = 0 ELSE PON =1
- 2010: IF Y=0 THEN AVG[X]=PON+AVG[X]
- 2020: YC=2*(Y+FDISP)
- 2030: XC=3*X
- 2040: PSET(XC,YC),PON
- 2050: PSET(XC+1,YC),PON
- 2060: PSET(XC+1,YC+1),PON
- 2070: PSET(XC,YC+1),PON
- 2080: PSET(XC+2,YC),PON
- 2090: PSET(XC+2,YC+1),PON
- 2095: IF PON=1 THEN LPRINT CHR$(233);ELSE LPRINT CHR$(79);
- 2100: REM
- 2110: REM rotating gen 5(1&2)
- 2120: REM
- 2130: CNT8 = CNT8 +1
- 2140: IF CNT8<8 THEN GOTO 2220
- 2150: GEN5[1,0]=GEN5[1,1] : GEN5[2,0]=GEN5[2,1]
- 2160: FOR I=1 TO 5
- 2170: IF I=5 THEN J=0 ELSE J=I+1
- 2180: GEN5[1,I]=GEN5[1,J]
- 2190: GEN5[2,I]=GEN5[2,J]
- 2200: NEXT I
- 2210: CNT8=0
- 2220: NEXT X
- 2230: FOR L=1 TO 5
- 2240: GEN5[1,L]=G1[L]
- 2250: GEN5[2,L]=G2[L]
- 2260: NEXT L
- 2270: NEXT Y
- 2280: FDISP=FDISP+FSIZE+3
- 2290: IF OVERWRITE = 1 OR (FDISP+FSIZE)>90 THEN FDISP=0
- 2300: FOR L=1 TO 5
- 2310: GEN5[1,L]=FG1[L]
- 2320: GEN5[2,L]=FG2[L]
- 2330: NEXT L
- 2335: LPRINT
- 2340: NEXT FRAME
- 2350: SCREEN 2
- 2360: PRINT
- 2365: LPRINT CHR$(12)
- 2370: IF PRINTER=1 THEN LPRINT
- 2380: PRINT "starting pattern of gen5-1 :";
- 2390: IF PRINTER=1 THEN LPRINT "starting pattern of gen5-1 :";
- 2400: FOR X=1 TO 5
- 2410: PRINT GEN5[1,X];
- 2420: IF PRINTER=1 THEN LPRINT GEN5[1,X];
- 2430: NEXT X
- 2440: PRINT
- 2450: IF PRINTER=1 THEN LPRINT
- 2460: PRINT "starting pattern of gen5-2 :";
- 2470: IF PRINTER=1 THEN LPRINT "starting pattern of gen5-2:";
- 2480: FOR X=1 TO 5
- 2490: PRINT GEN5[2,X];
- 2500: IF PRINTER=1 THEN LPRINT GEN5[2,X];
- 2510: NEXT X
- 2520: PRINT
- 2530: IF PRINTER=1 THEN LPRINT
- 2540: PRINT
- 2550: IF PRINTER=1 THEN LPRINT
- 2560: PRINT "Following pixel-on time averages over ";MAXFRAMES;"frames"
- 2570: IF PRINTER=1 THEN LPRINT "Following pixel on time averages over ";MAXFRAMES;"frames"
- 2580: PRINT
- 2590: IF PRINTER=1 THEN LPRINT
- 2600: PRINT "pixel","color","avg. on"
- 2610: IF PRINTER=1 THEN LPRINT "pixel","color","avg. on"
- 2620: FOR X=0 TO 79
- 2630: PRINT X, CO[INT(X/10)+1],AVG[X]/MAXFRAMES
- 2640: IF PRINTER=1 THEN LPRINT X, CO[INT(X/10)+1],AVG[X]/MAXFRAMES
- 2650: NEXT X

## Claims

1. A display control (8,18,20,30) system for producing an optical grey-scale image on an LCD device having an array of display elements each providing a first or a second optical state in response to a first or a second signal level respectively, the array of display elements having a plurality of rows and a plurality of columns, the system comprising:
means (8,18,20) for generating respective display signals for the display elements for producing a grey-scale image of a specified colour, the display signals comprising digital signals each having a pattern of bits respectively corresponding to the first or the second signal level, a predefined pattern cycle and a duty cycle related to the optical grey-scale of the image at the position of the respective display element, the pattern of bits of each one of the digital signals being repetitively generated, the means for generating display signals providing successive bits of the display signals for respective display elements in successive timeframes, in each timeframe one bit of each of the display signals being provided in sequence for consecutive display elements in each row from a first to a last display element of the row and for consecutive rows beginning at a first row and ending at a last row of the array; the system being characterised by:
the generating means causing a predetermined skewing of each subsequently generated display signal having a pattern cycle with a bit length which divides integrally into the total number of display elements in a row each time a bit of a respective display signal is provided for the last display element of a row, and causing a predetermined skewing of each subsequently generated display signal having a pattern cycle with a bit length which divides integrally into the total number of display elements in the array each time a bit of a respective display signal is provided for the last display element of the last row of the array.

2. A display control system according to claim 1, wherein the means (8,18,20) for generating the display signals for the display elements includes:
means (8) for concurrently generating a plurality of serial digital signals each having a pattern of bits respectively corresponding to the first or the second signal levels, a predefined pattern cycle and a different duty cycle;
means (8) for generating the first and the second signal levels;
display control means (8,20) for providing address data for sequentially addressing consecutive display elements in consecutive rows of the array in each timeframe from the first display element of the first row to the last display element of the last row, colour attribute data associated with each display element being addressed, an end-of-row signal when address data for addressing the last display element of a row is provided, and an end-of-frame signal when address data for addressing the last display element of the last row is provided; and
display signal selection means (30) responsive to the address data and the colour attribute data for selecting the first or the second signal level, or a respective bit of one of the plurality of serial digital signals having a duty cycle related to the optical grey-scale of the image at the position of the display element being addressed, and wherein the means for generating the plurality of serial digital signals is responsive to the end-of-row signal for skewing by a predetermined number of bit positions each subsequently generated digital signal having a pattern cycle with a bit length which divides integrally into the number of display elements of a row, and is further responsive to the end-of-frame signal for skewing by a predetermined number of bit positions each subsequently generated digital signal having a pattern cycle with a bit length which divides integrally into total number of display elements of the array.

3. A display control system according to claim 2, wherein the means (8,18,20) for generating a plurality of serial digital signals includes respective feedback shift register means (8,20) for generating each pair of serial digital signals having the same pattern cycle and complementary patterns of bits.

4. A display control system according to claim 1, wherein the optical grey-scale image produced on the display device is composed of an array of pixels each consisting of a respective one of the display elements, the image having eight grey-scale levels and each one of the display signals having a pattern cycle of 3 or 5 and a duty cycle of ¹/₃ or ²/₃ or 1/5, 2/5, 3/5 or 4/5, respectively, or a duty cycle of 0 or 1, where the duty cycle of 0 corresponds to the first optical state and the duty cycle of 1 corresponds to the second optical state.

5. A display control system according to claim 1, wherein the optical grey-scale image produced on the display device is composed of an array of pixels each consisting of a separate group of display elements in consecutive rows and consecutive columns, and a respective optical grey-scale level is obtained for each one of the pixels by cross-hatching of the display elements of the pixel by providing respective display signals therefor.

6. A display control system according to claim 5, wherein each pixel of the optical grey-scale image produced on the display device consists of a respective group of four mutually adjacent display elements including two pairs of diagonally adjacent display elements, the image having sixteen grey-scale levels, each one of the display signals having a pattern cycle of 3 or 5 and a duty cycle of ¹/₃ or ²/₃ or 1/5, 2/5, 3/5 or 4/5, respectively or a duty cycle of 0 or 1, the display control system generating a respective pair of display signals having the same duty cycle for each diagonally adjacent pair of display elements of a pixel, and the duty cycles of the respective pairs of display signals for the two diagonally adjacent pairs of display elements of each pixel being 0-0, 0-1/5, 1/5-1/5, 1/5-¹/₃ ¹/₃-¹/₃, ¹/₃-2/5, 2/5-2/5, ¹/₃-²/₃, 2/5-²/₃, 3/5-3/5 3/5-²/₃, ²/₃-²/₃, ²/₃-4/5, 4/5-4/5, 1-4/5 or 1-1, where the duty cycle of 0 corresponds to the first optical state and the duty cycle of 1 corresponds to the second optical state.

7. A method for driving an LCD device having a multiplicity of display elements each providing a first or a second optical state in response to a first or a second signal level, respectively, to produce an optical grey-scale image, the display elements being disposed in an array having a plurality of rows and a plurality of columns, the method comprising the steps of:
generating respective display signals for the display elements for producing a grey-scale image of a specified colour, the display signals comprising digital signals each having a pattern of bits respectively corresponding to the first or the second signal level and having a predefined pattern cycle and a duty cycle related to the optical grey-scale of the image at the position of the respective display element, the pattern of this of each one of the digital signals being repetitively generated;
providing successive bits of the display signals for the display elements in successive timeframes, in each timeframe one bit of each of the display signals being provided in sequence for consecutive display elements in each row from a first to a last display element of the row, and for consecutive rows beginning at a first row and ending at a last row of the array; the method characterised by the steps of:
causing a predetermined skewing of each subsequently generated display signal having a pattern cycle with a bit length which divides integrally into the total number of display elements in a row each time a bit of a respective display signal is provided for the last display element of a row; and
causing a predetermined skewing of each subsequently generated display signal having a pattern cycle with a bit length which divides integrally into the total number of display elements in the array each time a bit of a respective display signal is provided for the last display element of the last row of the array, whereby in successive timeframes adjacent display elements in each row of the array are provided with different sequences of the first and the second signal levels, and adjacent display elements in each column of the array are provided with different sequences of the first and the second signal levels.

8. A method for driving a display device according to claim 7, wherein the step of generating the first and the second signal levels, and concurrently generating a plurality of serial digital signals each having a pattern of bits respectively corresponding to the first or the second signal levels, a predefined pattern cycle, and a different duty cycle; and the step of providing successive bits of the display signals for the display elements in successive timeframes includes the steps of generating address data for sequentially addressing consecutive display elements in consecutive rows of the array in each timeframe from the first display element of the first row to the last display element of the last row, generating colour attribute data associated with each display element being addressed, generating an end-of-row signal when address data for addressing the last display element of a row is generated, generating an end-of-frame signal when address data for addressing the last display element of the last row is generated, and selecting the first or the second signal level, or a respective bit of one of the plurality of serial digital signals having a duty cycle representative of the optical grey-scale of the image at the position of the display element being addressed; and wherein each subsequently generated digital signal having a pattern cycle with a bit length which divides integrally into the number of display elements of a row is skewed by a predetermined number of bit positions each time the end-of-row signal is generated and each subsequently generated digital signal having a pattern cycle with a bit length which divides integrally into the total number of display elements of the array is skewed by a predetermined number of bit positions each time the end-of frame signal is generated.

9. A method for driving a display device according to claim 7, wherein the optical grey-scale image produced on the display device is composed of an array of pixels each consisting of a respective one of the display elements, the image having eight grey-scale levels and each one of the display signals having a pattern cycle of 3 or 5 and a duty cycle of 1 or ¹/₃, or 1/5, 2/5 or 4/5, respectively, or a duty cycle of 0 or 1, where the duty cycle of 0 corresponds to the first optical state and the duty cycle of 1 corresponds to the second optical state.

10. A method for driving a display device according to claim 7, wherein the topical grey-scale image produced on the display device is composed of an array of pixels each consisting of a separate group of display elements in consecutive rows and consecutive columns, and a respective grey-scale level is obtained for each one of the pixels by cross-hatching of the display elements of the pixel by providing respective display signals therefor.

11. A method for driving a display device according to claim 10, wherein each pixel of the optical grey-scale image produced on the display device consists of a respective group of four mutually adjacent display elements, including two pairs of diagonally adjacent display elements, the image having sixteen grey-scale levels, each one of the display signals having a pattern cycle of 3 or 5 and a duty cycle of ¹/₃ or ²/₃, or 1/5, 2/5, 3/5 or 4/5, respectively, or a duty cycle or O or 1, the display control system generating a respective pair of display signals having the same duty cycle for each diagonally adjacent pair of display elements of a pixel, and the duty cycles of the respective pairs of display signals for the two diagonally adjacent pairs of display elements of each pixel being 0-0, 0-1/5, 1/5-1/5, 1/5-¹/₃, ¹/₃-¹/₃, ¹/₃-2/5, ¹/₃-²/₃, 2/5-²/₃, 3/5-3/5 3/5-²/₃, ²/₃-²/₃-4/5, 4/5-4/5, 1-4/5 or 1-1, where the duty cycle of 0 corresponds to the first optical state and the duty cycle of 1 corresponds to the second optical state.

## Patentansprüche

1. Anzeigesteuersystem (8,18,20,30) zum Erzeugen einer optischen, graustufigen Abbildung auf einer LCD-Einrichtung, die eine Feldanordnung von Anzeigeelementen besitzt, von denen jedes einen ersten oder einen zweiten optischen Zustand in Abhängigkeit eines ersten oder eines zweiten Signalpegels jeweils liefert, wobei die Feldanordnung von Anzeigeelementen eine Mehrzahl Reihen und eine Mehrzahl Spalten besitzt, wobei das System aufweist:
eine Einrichtung (8,18,20) zum Erzeugen entsprechender Anzeigesignale für die Anzeigeelemente zum Erzeugen einer graustufigen Abbildung einer spezifizierten Farbe, wobei die Anzeigesignale digitale Signale, von denen jedes jeweils ein Muster aus Bits besitzt, entsprechend dem ersten oder dem zweiten Signalpegel, einen vordefinierten Musterzyklus und einen Tastzyklus, der zu der optischen Grauskala der Abbildung an der Position des jeweiligen Anzeigeelements in Bezug steht, aufweist, wobei die Muster der Bits jedes der digitalen Signale wiederholt erzeugt werden, wobei die Einrichtung zum Erzeugen von Anzeigesignalen aufeinanderfolgende Bits von Anzeigesignalen für jeweilige Anzeigeelemente in aufeinanderfolgenden Zeitrahmen erzeugen, wobei in jedem Zeitrahmen ein Bit jedes der Anzeigesignale in einer Sequenz für aufeinanderfolgende Anzeigeelemente in jeder Reihe von einem ersten zu einem letzten Anzeigeelement der Reihe und für aufeinanderfolgende Reihen beginnend an einer ersten Reihe und endend an einer letzten Reihe der Feldanordnung geliefert werden, wobei das System gekennzeichnet ist dadurch:
daß die Erzeugungseinrichtung ein vorbestimmtes Versetzen jedes aufeinanderfolgend erzeugten Anzeigesignals verursacht, das einen Musterzyklus mit einer Bitlänge besitzt, die sich integral in die Gesamtanzahl von Anzeigeelementen in einer Reihe zu jedem Zeitpunkt unterteilt, zu dem ein Bit eines entsprechenden Anzeigesignals für das letzte Anzeigelement einer Reihe vorgesehen ist, und eine vorbestimmte Versetzung jedes aufeinanderfolgend erzeugten Signals versursacht, das einen Musterzyklus mit einer Bitlänge besitzt, die sich integral in die Gesamtanzahl von Anzeigeelementen in der Feldanordnung zu jedem Zeitpunkt unterteilt, zu dem ein Bit eines entsprechenden Anzeigesignals für das letzte Anzeigeelement der letzten Reihe der Feldanordnung vorgesehen ist.

2. Anzeigesteuersystem nach Anspruch 1, wobei die Einrichtung (8,18,20) zur Erzeugung der Anzeigesignale für die Anzeigeelemente umfaßt:
eine Einrichtung (8) zum gleichzeitigen Erzeugen einer Mehrzahl von seriellen, digitalen Signalen, von denen jedes ein Muster von Bits jeweils entsprechend dem ersten oder dem zweiten Signalpegel, einen vorstbestimmten Musterzyklus und einen unterschiedlichen Tastzyklus besitzt;
eine Einrichtung (8) zum Erzeugen des ersten und des zweiten Signalpegels;
eine Anzeigesteuereinrichtung (8,20), zum Bilden von Adressendaten für eine sequentielle Adressierung aufeinanderfolgender Anzeigeelemente in aufeinanderfolgenden Reihen der Feldanordnungen in jedem Zeitrahmen von dem ersten Anzeigeelement der ersten Reihe zu dem letzten Anzeigeelement der letzten Reihe, wobei Farbkennzeichnungsdaten, die jedem Anzeigeelement zugeordnet sind, adressiert werden, ein Signal für das Ende der Reihe, wenn Adressendaten zum Adressieren des letzten Anzeigeelements einer Reihe geliefert werden, und ein Signal für das Ende eines Rahmens, wenn Adressendaten zum Adressieren des letzten Anzeigeelements der letzten Reihe geliefert werden; und
eine Anzeigesignalauswahleinrichtung (30), die auf die Adressendaten und die Farbkennzeichnungsdaten zur Auswahl des ersten oder des zweiten Signalpegels anspricht, oder ein entsprechendes Bit einer der Mehrzahl von seriellen, digitalen Signalen, das einen Tastzyklus besitzt, der der optischen Grauabstufung der Abbildung an der Position des Anzeigelements, das adressiert ist, zugeordnet ist, und wobei die Einrichtung zur Erzeugung der Mehrzahl serieller, digitaler Signale auf das Signal des Endes der Reihe für eine Versetzung um eine vorbestimmte Anzahl von Bitpositionen anspricht, wobei jedes darauffolgend erzeugte digitale Signal, das einen Musterzyklus mit einer Bitlänge besitzt, die sich integral in die Anzahl der Anzeigeelemente einer Reihe unterteilt, und weiterhin auf das Signal des Endes des Rahmens zur Versetzung um eine vorbestimmte Anzahl von Bitpositionen anspricht, wobei jedes darauffolgend erzeugte digitale Signal einen Musterzyklus mit einer Bitlänge besitzt, die sich integral in eine Gesamtanzahl von Anzeigeelementen der Feldanordnung unterteilt.

3. Anzeigesteuersystem nach Anspruch 2, wobei die Einrichtung (8,18,20) zur Erzeugung einer Mehrzahl serieller, digitaler Signale eine jeweilige Rückführschieberegistereinrichtung (8/20) zur Erzeugung eines Paars serieller, digitaler Signale besitzt, die denselben Musterzyklus und komplentäre Muster aus Bits besitzt.

4. Anzeigesteuersystem nach Anspruch 1, wobei die optische Grauabstufungsabbildung, die auch für die Anzeigevorrichtung erzeugt wird, aus einer Feldanordnung aus Pixeln zusammengesetzt ist, von denen jedes aus einem entsprechenden der Anzeigeelemente besteht, wobei die Abbildung acht Grauabstufungspegel besitzt und jedes der Anzeigesignale einen Musterzyklus von 3 oder 5 und einen Tastzyklus von 1/3 oder 2/3 oder 1/5, 2/5, 3/5 oder 4/5 jeweils besitzt, oder einen Tastzyklus von 0 oder 1, wobei der Tastzyklus von 0 dem ersten optischen Zustand entspricht und der Tastzyklus von 1 dem zweiten optischen Zustand entspricht.

5. Anzeigesteuersystem nach Anspruch 1, wobei die optische Grauabstufungsabbildung, die auf der Anzeigevorrichtung erzeugt wird, aus einer Feldanordnung aus Pixeln zusammengesetzt ist, von denen jedes aus einer separaten Gruppe aus Anzeigeelementen in aufeinanderfolgenden Reihen und aufeinanderfolgenden Spalten steht, und ein jeweiliger optischer Grauabstufungspegel für jedes der Pixel durch Querschraffierung der Anzeigeelemente des Pixels durch Vorsehung jeweiliger Anzeigesignale dafür erhalten wird.

6. Anzeigesteuersystem nach Anspruch 5, wobei jedes Pixel der optischen Grauskabstufungsabbildung, die auf der Anzeigevorrichtung gebildet wird, aus einer entsprechenden Gruppe von vier gegenseitig benachbarten Anzeigeelementen besteht, die zwei Paare von diagonal benachbarten Anzeigeelementen umfaßt, wobei die Abbildung sechzehn Grauabstufungspegel besitzt, wobei jedes der Anzeigesignale einen Musterzyklus von 3 oder 5 und einen Tastzyklus von 1/3 oder 2/3 oder 1/5, 2/5, 3/5 oder 4/5 jeweils oder einen Tastzyklus von 0 oder 1 besitzt, wobei das Anzeigesteuersystem ein entsprechendes Paar Anzeigesignale erzeugt, die denselben Tastzyklus für jedes diagonal benachbarte Paar von Anzeigeelementen eines Pixels besitzt, und die Tastzyklen der entsprechenden Paare der Anzeigesignale für zwei diagonal benachbarte Paare der Anzeigeelemente jedes Pixels 0-0, 0-1/5, 1/5-1/5, 1/5-1/3, 1/3-1/3, 1/3-2/5, 2/5-2/5, 1/3-2/3, 2/5-2/3, 3/5-3/5, 3/5-2/3, 2/3-2/3, 2/3-4/5, 4/5-4/5, 1-4/5 oder 1-1 ist, wobei der Tastzyklus von 0 dem ersten optischen Zustand entspricht und der Tastzyklus von 1 dem zweiten optischen Zustand entspricht.

7. Verfahren zum Treiben einer LCD-Vorrichtung, die eine Vielzahl von Anzeigeelementen besitzt, von denen jedes einen ersten oder einen zweiten Zustand in Abhängigkeit eines ersten oder eines zweiten Signalpegels jeweils liefert, um eine optische, grauabgestufte Abbildung zu erzeugen, wobei die Anzeigeelemente in einer Feldanordnung angeordnet sind, die eine Mehrzahl von Reihen und eine Mehrzahl von Spalten besitzt, wobei das Verfahren die Schritte aufweist:
Erzeugung jeweiliger Anzeigesignale für die Anzeigeelemente zur Erzeugung einer grauabgestufte Abbildung einer spezifizierten Farbe, wobei die Anzeigesignale digitale Signale aufweisen, von denen jedes ein Muster von Bits jeweils entsprechend dem ersten oder dem zweiten Signalpegel besitzt und einen vordefinierten Musterzyklus und einen Tastzyklus besitzt, die zu der optischen Grauabstufung der Abbildung an der Position des entsprechenden Anzeigeelements in Bezug gesetzt sind, wobei das Muster hiervon jedes der digitalen Signale wiederholend erzeugt wird;
Bildung aufeinanderfolgender Bits der Anzeigesignale für die Anzeigeelemente in aufeinanderfolgenden Zeitrahmen, wobei in jedem Zeitrahmen ein Bit jedes der Anzeigesignale in Folge für aufeinanderfolgende Anzeigeelemente in jeder Reihe von einem ersten zu einem letzten Anzeigeelement der Reihe und für aufeinanderfolgende Reihen beginnend an einer ersten Reihe und endend an einer letzten Reihe der Anordnung vorgesehen wird, wobei das Verfahren durch die Schritte gekennzeichnet ist:
Bewirken einer vorbestimmten Versetzung jedes aufeinanderfolgend erzeugten Anzeigesignals, das einen Musterzyklus mit einer Bitlänge besitzt, die sich integral in die Gesamtanzahl der Anzeigeelemente in einer Reihe zu jedem Zeitpunkt unterteilt, zu dem ein Bit eines jeweiligen Anzeigesignals für das letzte Anzeigeelement einer Reihe vorgesehen wird; und
Bewirken einer vorbestimmten Versetzung jedes aufeinanderfolgend erzeugten Anzeigesignals, das einen Musterzyklus mit einer Bitlänge besitzt, die sich integral in die Gesamtanzahl der Anzeigelemente in der Feldanordnung zu jedem Zeitpunkt unterteilt, zu dem ein Bit eines jeweiligen Anzeigesignals für das letzte Anzeigeelement der letzten Reihe der Feldanordnung vorgesehen wird, wobei in aufeinanderfolgenden Zeitrahmen benachbarte Anzeigeelemente in jeder Reihe der Feldanordnung mit unterschiedlichen Sequenzen des ersten und des zweiten Signalspegels vorgesehen werden und benachbarte Anzeigeelemente in jeder Spalte der Feldanordnung mit unterschiedlichen Sequenzen des ersten und des zweiten Signalpegels vorgesehen werden.

8. Verfahren zum Treiben einer Anzeigevorrichtung gemäß Anspruch 7, wobei der Schritt einer Erzeugung des ersten und des zweiten Signalpegels und gleichzeitig Erzeugen einer Mehrzahl serieller, digitaler Signale, von denen jedes ein Muster aus Bits jeweils entsprechend dem ersten oder dem zweiten Signalpegel einen vordefinierten Musterzyklus und einen unterschiedlichen Tastzyklus besitzt; und der Schritt einer Bildung aufeinanderfolgender Bits der Anzeigesignale für die Anzeigeelemente in aufeinanderfolgenden Zeitrahmen die Schritte einer Erzeugung von Adressendaten für eine sequentielle Adressierung aufeinanderfolgender Anzeigeelemente in aufeinanderfolgenden Reihen der Feldanordnung in jedem Zeitrahmen von dem ersten Anzeigeelement der ersten Reihe zu dem letzten Anzeigeelement der letzten Reihe, Erzeugung von Farbkennzeichnungsdaten, die jedem Anzeigeelement, das adressiert wird, zugeordnet sind, Erzeugung eines Signals für ein Ende einer Reihe, wenn Adressendaten zum Adressieren des letzten Anzeigeelements einer Reihe erzeugt werden, Erzeugung eines Signals für das Ende eines Rahmens, wenn Adressendaten zum Adressieren des letzten Anzeigeelements der letzten Reihe erzeugt werden, und Auswahl des ersten oder des zweiten Signalpegels, oder eines entsprechenden Bits eines der Mehrzahl serieller, digitaler Signale, die einen Taktzyklus besitzen, der für die optische Grauabstufung der Abbildung an der Position des Anzeigeelements, das adressiert wird, besitzt, umfaßt; und wobei jedes aufeinanderfolgend erzeugte digitale Signal einen Musterzyklus mit einer Bitlänge besitzt, die sich integral in die Anzahl von Anzeigeelementen einer Reihe unterteilt, um eine vorbestimmte Anzahl von Bit-Positionen zu jedem Zeitpunkt, zu dem das Signal der Ende der Reihe erzeugt wird, versetzt wird, und jedes aufeinanderfolgend erzeugte digitale Signal, das einen Musterzyklus mit einer Bitlänge besitzt, die sich integral in die Gesamtzahl von Anzeigeelementen der Feldanordnung unterteilt, um eine vorgegebene Anzahl von Bitpositionen zu jedem Zeitpunkt, zu dem das Signal für ein Ende eines Rahmens erzeugt wird, versetzt wird.

9. Verfahren zum Treiben einer Anzeigevorrichtung gemäß Anspruch 7, wobei die optische Grauabstufungsabbildung, die auf der Anzeigeeinrichtung erzeugt wird, aus einer Feldanordnung aus Pixeln zusammengesetzt ist, von dem jedes aus einem jeweiligen der Anzeigeelemente besteht, wobei die Abbildung acht Grauabstufungspegel besitzt und jedes der Anzeigesignale einen Musterzyklus von 3 oder 5 und einen Tastzyklus von 1 oder 1/3, oder 1/5, 2/5 oder 4/5 jeweils besitzt, oder einen Tastzyklus von 0 oder 1, wobei der Tastzyklus von 0 dem ersten optischen Zustand entspricht und der Tastzyklus von 1 dem zweiten optischen Zustand entspricht.

10. Verfahren zum Treiben einer Anzeigevorrichtung gemäß Anspruch 7, wobei die örtliche Grauabstufungsabbildung, die auf der Anzeigevorrichtung produziert wird, aus einer Feldanordnung aus Pixeln zusammengesetzt ist, von denen jedes aus einer separaten Gruppe von Anzeigeelementen in aufeinanderfolgenden Reihen und aufeinanderfolgenden Spalten besteht, und ein jeweiliger Grauabstufungspegel für jedes der Pixel durch Querschraffierung der Anzeigeelemente des Pixels durch Schaffung entsprechender Anzeigesignale dafür erhalten wird.

11. Verfahren zum Treiben einer Anzeigevorrichtung nach Anspruch 10, wobei jedes Pixel der optischen Grauabstufungsabbildung, die auf der Anzeigeeinrichtung produziert wird, aus einer jeweiligen Gruppe von 4 gegenseitig benachbarten Anzeigeelementen besteht, die zwei Paare diagonal benachbarter Anzeigeelemente umfassen, wobei die Abbildung sechszehn Grauabstufungspegel besitzt, wobei jedes der Anzeigesignale einen Musterzyklus von 3 oder 5 und einen Tastzyklus von 1/3 oder 2/3, oder 1/5, 2/5, 3/5 oder 4/5 jeweils oder einen Tastzyklus von 0 oder 1 besitzt, wobei das Anzeigesteuersystem ein jeweiliges Paar Anzeigesignale erzeugt, das denselben Tastzyklus für jedes diagonal benachbarte Paar von Anzeigeelementen eines Pixels besitzt und die Tastzyklen der jeweiligen Paare von Anzeigesignalen für zwei diagonal benachbarte Paare der Anzeigeelemente jedes Pixels 0-0, 0-1/5, 1/5-1/5, 1/5-1/3, 1/3-1/3, 1/3-2/5, 1/3-2/3, 2/5-2/3, 3/5-3/5 3/5-2/3, 2/3-2/3, 2/3-4/5, 4/5-4/5, 1-4/5 oder 1-1 besitzt, wobei der Tastzyklus von 0 dem ersten optischen Zustand und der Tastzyklus von 1 dem zweiten optischen Zustand entspricht.

## Revendications

1. Un système de commande de visualisation (8, 18, 20, 30) destiné à produire une image optique avec une gamme de gris sur un dispositif de visualisation à cristal liquide comportant un réseau d'éléments de visualisation, chacun d'eux produisant un premier ou un second état optique sous l'effet respectivement d'un premier ou d'un second niveau de signal, le réseau d'éléments de visualisation ayant un ensemble de lignes et un ensemble de colonnes, le système comprenant :
des moyens (8, 18, 20) pour générer des signaux de visualisation respectifs pour les éléments de visualisation, pour produire une image avec une gamme de gris d'une couleur spécifiée, les signaux de visualisation comprenant des signaux numériques ayant chacun une configuration de bits qui correspond respectivement au premier ou au second niveau de signal, un cycle de configuration prédéfini et un rapport cyclique lié à la gamme de gris optique de l'image à la position de l'élément de visualisation respectif, la configuration de bits de chacun des signaux numériques étant générée de façon répétitive, les moyens destinés à générer des signaux de visualisation produisant des bits successifs des signaux de visualisation pour des éléments de visualisation respectifs dans des trames temporelles successives, et au cours de chaque trame temporelle, un bit de chacun des signaux de visualisation étant produit séquentiellement pour des éléments de visualisation consécutifs dans chaque ligne, d'un premier à un dernier élément de visualisation de la ligne, et pour des lignes consécutives, en commençant à une première ligne et en terminant à une dernière ligne du réseau; le système étant caractérisé en ce que :
les moyens de génération produisent un décalage prédéterminé de chaque signal de visualisation généré à la suite ayant un cycle de configuration avec un nombre de bits qui est un diviseur du nombre total d'éléments de visualisation dans une ligne, chaque fois qu'un bit d'un signal de visualisation respectif est produit pour le dernier élément de visualisation d'une ligne, et ils produisent un décalage prédéterminé de chaque signal de visualisation généré à la suite, ayant un cycle de configuration avec un nombre de bits qui est un diviseur du nombre total d'éléments de visualisation dans le réseau, chaque fois qu'un bit d'un signal de visualisation respectif est produit pour le dernier élément de visualisation de la dernière ligne du réseau.

2. Un système de commande de visualisation selon la revendication 1, dans lequel les moyens (8, 18, 20) destinés à générer les signaux de visualisation pour les éléments de visualisation comprennent :
des moyens (8) pour générer simultanément un ensemble de signaux numériques série ayant chacun une configuration de bits qui correspond respectivement au premier niveau de signal ou au second niveau de signal, un cycle de configuration prédéfini et un rapport cyclique différent;
des moyens (8) pour générer les premier et second niveaux de signal;
des moyens de commande de visualisation (8, 20) pour produire des données d'adresse, pour adresser séquentiellement des éléments de visualisation consécutifs dans des lignes consécutives du réseau, dans chaque trame temporelle, à partir du premier élément de visualisation de la première ligne, jusqu'au dernier élément de visualisation de la dernière ligne, des données d'attribut de couleur associées à chaque élément de visualisation qui est adressé, un signal de fin de ligne lorsque des données d'adresse pour l'adressage du dernier élément de visualisation d'une ligne sont produites, et un signal de fin de trame lorsque des données d'adresse pour l'adressage du dernier élément de visualisation de la dernière ligne sont produites; et
des moyens de sélection de signal de visualisation (30) qui réagissent aux données d'adresse et aux données d'attribut de couleur en sélectionnant le premier ou le second niveau de signal, ou un bit respectif d'un signal parmi un ensemble de signaux numériques série ayant un rapport cyclique lié à la gamme de gris optique de l'image à la position de l'élément de visualisation qui est adressé, et dans lequel les moyens destinés à générer l'ensemble de signaux numériques série réagissent au signal de fin de ligne en décalant d'un nombre prédéterminé de positions de bit chaque signal numérique généré à la suite ayant un cycle de configuration avec un nombre de bits qui est un diviseur du nombre d'éléments de visualisation d'une ligne, et ils réagissent en outre au signal de fin de trame en décalant d'un nombre prédéterminé de positions de bit chaque signal numérique généré à la suite ayant un cycle de configuration avec un nombre de bits qui est un diviseur du nombre total d'éléments de visualisation du réseau.

3. Un système de commande de visualisation selon la revendication 2, dans lequel les moyens (8, 18, 20) destinés à générer un ensemble de signaux numériques série comprennent des registres à décalage avec bouclage respectifs (18, 20) pour générer chaque paire de signaux numériques série ayant le même cycle de configuration et des configurations de bits complémentaires.

4. Un système de commande de visualisation selon la revendication 1, dans lequel l'image de gamme de gris optique qui est produite sur le dispositif de visualisation est composée d'un réseau de pixels, avec chaque pixel constitué par l'un respectif des éléments de visualisation, l'image ayant huit niveaux de gamme de gris et chacun des signaux de visualisation ayant un cycle de configuration de 3 ou 5 et un rapport cyclique de 1/3 ou 2/3, ou 1/5, 2/5, 3/5 ou 4/5, respectivement, ou un rapport cyclique de 0 ou 1, le rapport cyclique de 0 correspondant au premier état optique et le rapport cyclique de 1 correspondant au second état optique.

5. Un système de commande de visualisation selon la revendication 3, dans lequel l'image de gamme de gris optique qui est produite sur le dispositif de visualisation est composée d'un réseau de pixels, chacun d'eux consistant en un groupe séparé d'éléments de visualisation dans des lignes consécutives et des colonnes consécutives, et un niveau respectif de gamme de gris optique est obtenu pour chacun des pixels en hachurant les éléments de visualisation du pixel, en produisant des signaux de visualisation respectifs pour ces éléments de visualisation.

6. Un système de commande de visualisation selon la revendication 5, dans lequel chaque pixel de l'image de gamme de gris optique qui est produite sur le dispositif de visualisation consiste en un groupe respectif de quatre éléments de visualisation mutuellement adjacents, comprenant deux paires d'éléments de visualisation adjacents en diagonale, l'image ayant seize niveaux de gamme de gris, chacun des signaux de visualisation ayant un cycle de configuration de 3 ou 5 et un rapport cyclique de 1/3 ou 2/3, ou 1/5, 2/5, 3/5 ou 4/5, respectivement, ou un rapport cyclique de 0 ou 1, le système de commande de visualisation générant une paire respective de signaux de visualisation ayant le même rapport cyclique pour chaque paire d'éléments de visualisation d'un pixel qui sont adjacents en diagonale, et les rapports cycliques des paires respectives de signaux de visualisation pour les deux paires d'éléments de visualisation adjacents en diagonale, de chaque pixel, étant 0-0, 0-1/5, 1/5-1/5, 1/5-1/3, 1/3-1/3, 1/3-2/5, 2/5-2/5, 1/3-2/3, 2/5-2/3, 3/5-3/5 3/5-2/3, 2/3-2/3, 2/3-4/5, 4/5-4/5, 1-4/5 ou 1-1, le rapport cyclique de 0 correspondant au premier état optique et le rapport cyclique de 1 correspondant au second état optique.

7. Un procédé pour attaquer un dispositif de visualisation à cristal liquide ayant une multiplicité d'éléments de visualisation, produisant chacun un premier ou un second état optique sous l'effet respectivement d'un premier ou d'un second niveau de signal, pour produire une image de gamme de gris optique, les éléments de visualisation étant disposés en un réseau ayant un ensemble de lignes et un ensemble de colonnes, le procédé comprenant les étapes suivantes :
on génère des signaux de visualisation respectifs pour les éléments de visualisation, pour produire une image de gamme de gris d'une couleur spécifiée, les signaux de visualisation comprenant des signaux numériques ayant chacun une configuration de bits qui correspond respectivement au premier ou au second niveau de signal, et ayant un cycle de configuration prédéfini et un rapport cyclique lié à la gamme de gris optique de l'image à la position de l'élément de visualisation respectif, la configuration de bits de chacun des signaux numériques étant générée de façon répétitive;
on produit des bits successifs des signaux de visualisation pour les éléments de visualisation dans des trames temporelles successives, un bit de chacun des signaux de visualisation, dans chaque trame temporelle, étant produit en séquence pour des éléments de visualisation consécutifs dans chaque ligne, à partir d'un premier élément de visualisation jusqu'à un dernier élément de visualisation de la ligne, et pour des lignes consécutives commençant à une première ligne et se terminant à une dernière ligne du réseau; le procédé étant caractérisé par les étapes suivantes :
on produit un premier décalage prédéterminé de chaque signal de visualisation généré à la suite ayant un cycle de configuration avec un nombre de bits qui est un diviseur du nombre total d'éléments de visualisation dans une ligne, chaque fois qu'un bit d'un signal de visualisation respectif est produit pour le dernier élément de visualisation d'une ligne; et
on produit un décalage prédéterminé de chaque signal de visualisation généré à la suite, ayant un cycle de configuration avec un nombre de bits qui est un diviseur du nombre total d'éléments de visualisation dans le réseau, chaque fois qu'un bit d'un signal de visualisation respectif est produit pour le dernier élément de visualisation de la dernière ligne du réseau, grâce à quoi au cours de trames temporelles successives, des éléments de visualisation adjacents dans chaque ligne du réseau reçoivent des séquences différentes des premier et second niveaux de signal, et des éléments de visualisation adjacents dans chaque colonne du réseau reçoivent des séquences différentes des premier et second niveaux de signal.

8. Un procédé pour attaquer un dispositif de visualisation selon la revendication 7, dans lequel l'étape de génération des premier et second niveaux de signal comprend la génération simultanée d'un ensemble de signaux numériques série ayant chacun une configuration de bits correspondant respectivement aux premier ou second niveau de signal, un cycle de configuration prédéfini et un rapport cyclique différent; et l'étape qui consiste à produire des bits successifs des signaux de visualisation pour les éléments de visualisation dans des trames temporelles successives, comprend les étapes qui consistent à générer des données d'adresse pour adresser séquentiellement des éléments de visualisation consécutifs dans des lignes consécutives du réseau, dans chaque trame temporelle, depuis le premier élément de visualisation de la première ligne jusqu'au dernier élément de visualisation de la dernière ligne, à générer des données d'attribut de couleur associées à chaque élément de visualisation qui est adressé, à générer un signal de fin de ligne lorsque des données d'adresse pour l'adressage du dernier élément de visualisation d'une ligne sont générées, à générer un signal de fin de trame lorsque des données d'adresse pour l'adressage du dernier élément de visualisation de la dernière ligne sont générées, et à sélectionner le premier ou le second niveau de signal, ou un bit respectif de l'un des signaux de l'ensemble de signaux numériques série, ayant un rapport cyclique représentatif de la gamme de gris optique de l'image à la position de l'élément de visualisation qui est adressé; et dans lequel chaque signal numérique généré à la suite ayant un cycle de configuration avec un nombre de bits qui est un diviseur du nombre d'éléments de visualisation d'une ligne, est décalé d'un nombre prédéterminé de positions de bit chaque fois que le signal de fin de ligne est généré, et chaque signal numérique généré à la suite ayant un cycle de configuration avec un nombre de bits qui est un diviseur du nombre total d'éléments de visualisation du réseau, est décalé d'un nombre prédéterminé de positions de bit chaque fois que le signal de fin de trame est généré.

9. Un procédé pour attaquer un dispositif de visualisation selon la revendication 7, dans lequel l'image de gamme de gris optique qui est produite sur le dispositif de visualisation est composée d'un réseau de pixels, chaque pixel étant constitué par l'un respectif des éléments de visualisation, l'image ayant huit niveaux de gamme de gris et chacun des signaux de visualisation ayant un cycle de configuration de 3 ou 5 et un rapport cyclique de 1 ou 1/3, ou de 1/5, 2/5 ou 4/5, respectivement, ou un rapport cyclique de 0 ou 1, le rapport cyclique de 0 correspondant au premier état optique et le rapport cyclique de 1 correspondant au second état optique.

10. Un procédé pour attaquer un dispositif de visualisation selon la revendication 7, dans lequel l'image de gamme de gris optique qui est produite sur le dispositif de visualisation est composée d'un réseau de pixels, chaque pixel consistant en un groupe séparé d'éléments de visualisation dans des lignes consécutives et des colonnes consécutives, et un niveau de gamme de gris respectif est obtenu pour chacun des pixels en hachurant les éléments de visualisation du pixel, en produisant des signaux de visualisation respectifs pour ces éléments de visualisation.

11. Un procédé pour attaquer un dispositif de visualisation selon la revendication 10, dans lequel chaque pixel de l'image de gamme de gris optique qui est produite sur le dispositif de visualisation consiste en un groupe respectif de quatre éléments de visualisation mutuellement adjacents, comprenant deux paires d'éléments de visualisation adjacents en diagonale, l'image ayant seize niveaux de gamme de gris, chacun des signaux de visualisation ayant un cycle de configuration de 3 ou 5 et un rapport cyclique de 1/3 ou 2/3, ou de 1/5, 2/5, 3/5 ou 4/5, respectivement, ou un rapport cyclique de 0 ou 1, le système de commande de visualisation générant une paire respective de signaux de visualisation ayant le même rapport cyclique pour chaque paire d'éléments de visualisation d'un pixel qui sont adjacents en diagonale, et les rapports cycliques des paires respectives de signaux de visualisation pour les deux paires d'éléments de visualisation adjacents en diagonale, de chaque pixel, étant les suivants : 0-0, 0-1/5, 1/5-1/5, 1/5-1/3, 1/3-1/3, 1/3-2/5, 1/3/2/3, 2/5-2/3, 3/5-3/5 3/5-2/3, 2/3-2/3, 2/3-4/5, 4/5-4/5, 1-4/5 ou 1-1, le rapport cyclique de 0 correspondant au premier état optique et le rapport cyclique de 1 correspondant au second état optique.
